# EUROPÄISCHE PATENTSCHRIFT

(11) **EP 0 830 529 B1**
(45) Veröffentlichungstag und Bekanntmachung des Hinweises auf die Patenterteilung: **15.09.1999**
(21) Anmeldenummer: 96915980.5
(22) Anmeldetag: 31.05.1996
(51) Int. Cl.: F16J 15/08

(54) **VORRICHTUNG ZUR ABDICHTUNG ZWISCHEN BEWEGLICHEN ANLAGENTEILEN**
SEALING DEVICE BETWEEN MOVABLE PARTS IN MUTUAL CONTACT
DISPOSITIF ASSURANT L'ETANCHEITE ENTRE DES PARTIES MOBILES EN CONTACT MUTUEL

(30) Priorität: 09.06.1995 DE 19521915
(43) Veröffentlichungstag der Anmeldung: 25.03.1998
(73) Patentinhaber: MANNESMANN Aktiengesellschaft, 40213 Düsseldorf (DE)
(72) Erfinder: STARKE, Wilfried, D-59320 Enningerloh (DE)
(74) Vertreter: Meissner, Peter E., Dipl.-Ing.
(86) Internationale Anmeldenummer: DE9601003
(87) Internationale Veröffentlichungsnummer: WO9641979

(56) Entgegenhaltungen:
- WO-A-95/02136
- DE-A- 3 815 402

## Beschreibung

Die Erfindung betrifft eine Vorrichtung zur Abdichtung zwischen zwei relativ zueinander beweglichen Anlagenteilen gemäß dem Gattungsbegriff des Patentanspruchs 1. Eine solche Vorrichtung dient insbesondere zur Abdichtung an den Absperrelementen von Rauchgasarmaturen.

Aus der DE 38 15 402 A1 ist eine Vorrichtung zur Abdichtung der Berührungszone zwischen einem beweglichen Absperrelement einer Rohrleitung und einem ortsfesten Sitz bekannt, bei dem im Dichtungsbereich eine elastische Dichtung in Form eines langgestreckten Federstahlblechstreifens verwendet wird. Der Federstahlblechstreifen weist außerhalb der gewölbten Dichtungszone in Längsrichtung des Dichtungselements zwei Abwinkelungen auf. Die beiden Längskantenbereiche des Federstahlblechstreifens weisen zur selben Seite und sind im Sinne von Spannrändern übereinandergelegt und mittels einer Klemmeinrichtung (z.B. Schraubverbindung) an dem beweglichen Absperrelement oder an dem feststehenden Dichtsitz befestigbar. Insbesondere in Fällen, in denen während des Schließvorgangs die Relativbewegung zwischen dem Federstahlblechstreifen und dem Gegendichtsitz etwa senkrecht zur bogenförmig gekrümmten Dichtungszone verläuft, hat sich diese Dichtung sehr gut bewährt. In Fällen, in denen die Relativbewegung beim Schließen mehr tangential zur bogenförmig gewölbten Dichtungszone ausgeführt werden muß, kommt es gelegentlich zu extremen Belastungssituationen für die Federstahldichtung, die zu einem Abheben des Federstahlblechstreifens von der Auflagefläche und als Folge davon zu einem Bruch des Federstahlblechstreifens führen können.

Um derartige negative Folgen zu vermeiden, ist es aus der WO 95/02136 bekannt, im Inneren des Dichtungselementes ein Stützprofil vorzusehen, das im Sinne eines Niederhalters nahe der von der Einspannstelle am weitesten entfernten Abwinkelung auf der Auflagefläche des Federstahlblechstreifens anliegt und ein Abheben verhindert. Der Niederhalter kann beispielsweise als etwa V-förmiges Profil ausgebildet sein und wird zwischen den Spannrändern des Federstahlblechstreifens durch die Klemmvorrichtung mit befestigt. Da der Niederhalter wegen der in Rauchgasarmaturen vielfach auftretenden außerordentlich korrosiven Bedingungen ebenso wie der Federstahlblechstreifen aus hochlegiertem Material bestehen muß, ist der Kostenaufwand hierfür beträchtlich. Hinzu kommt der Nachteil, daß das Losbrechmoment beim Öffnen einer mit dem bekannten Dichtelement ausgerüsteten großflächigen Rauchgasklappe bedingt durch den Niederhalter unerwünscht hoch sein kann.

Aufgabe der Erfindung ist es, eine gattungsgemäße Vorrichtung dahingehend weiterzubilden, daß ein Abheben des Federstahlblechstreifens von der Auflagefläche mit möglichst geringem Material- und Montageaufwand sicher vermieden werden kann, ohne daß die erforderliche elastische Verformbarkeit des Dichtungselements unzulässig beeinträchtigt wird.

Gelöst wird diese Aufgabe durch eine Vorrichtung mit den Merkmalen des Patentanspruchs 1. Vorteilhafte Weiterbildungen der Erfindung sind in den Unteransprüchen 2 bis 12 angegeben.

Die Erfindung wird anhand der Figuren näher erläutert. Es zeigen:
- Fig. 1: eine erfindungsgemäße Vorrichtung mit L-Profil als Stützelement in perspektivischer Ansicht,
- Fig. 2: einen Schnitt quer zur Längsachse einer erfindungsgemäßen Vorrichtung ähnlich Fig. 1,
- Fig. 3: einen schematischen Querschnitt durch eine erfindungsgemäße Vorrichtung mit angedeuteter Verformung durch eine tangentiale Kraft H,
- Fig. 4: einen schematischen Querschnitt durch eine erfindungsgemäße Vorrichtung mit angedeuteter Verformung durch eine senkrecht auf den Dichtungsbereich einwirkende Kraft V,
- Fig. 5: einen Schnitt quer zur Längsachse einer erfindungsgemäßen Vorrichtung mit streifenförmigem Stützelement,
- Fig. 6: einen Schnitt quer zur Längsachse einer erfindungsgemäßen Vorrichtung mit U-Profil als Stützelement,
- Fig. 7: eine Seitenansicht eines aus Teilstücken zusammengesetzten Dichtungselements und
- Fig. 8: eine bekannte Dichtungsanordnung.

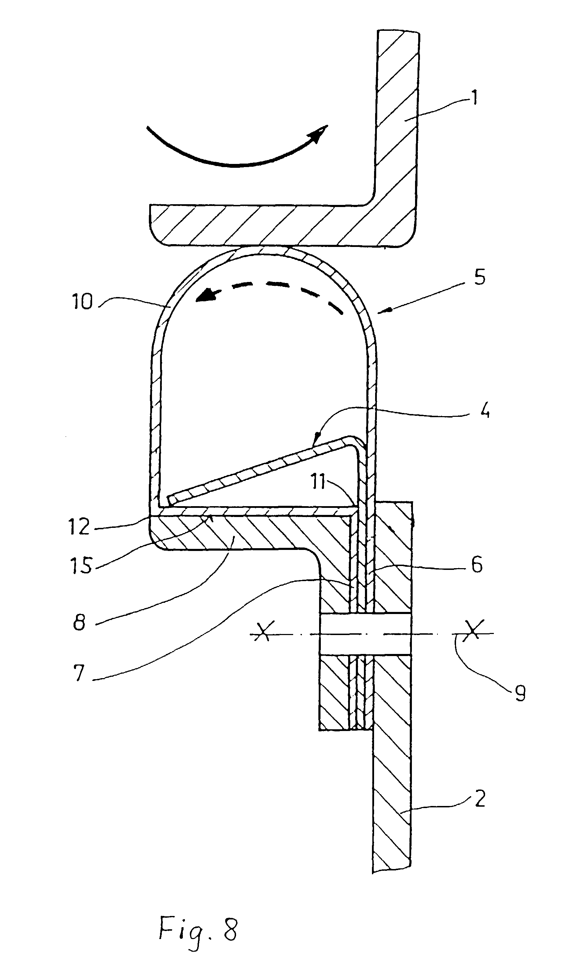

Eine nach dem bisherigen Stand der Technik gestaltete Dichtungsanordnung geht aus Fig. 8 hervor. Die beiden gegeneinander abzudichtenden Anlagenteile, die relativ zueinander bewegt werden, sind mit den Bezugszeichen 1 und 2 bezeichnet. Es kann sich hierbei z.B. um eine Absperrklappe 1 handeln, die etwa tangential in ihre Dichtposition relativ zum feststehenden Anlagenteil 2 mit dem Federstahlblechstreifen 5 eingeschwenkt wird, was durch den oberen gebogenen Pfeil angedeutet wird. Der Federstahlblechstreifen 5 könnte selbstverständlich auch alternativ an dem bewegten Anlagenteil befestigt sein. Dies ist durch den unteren gestrichelt gezeichneten gebogenen Pfeil angedeutet. Selbstverständlich ist es auch möglich, beide relativ zueinander bewegten Anlagenteile mit entsprechenden Federstahlblechstreifen 5 auszustatten. Vielfach werden auch, wie dies bei Jalousieklappen der Fall ist, zwei unmittelbar benachbarte Klappenflügel in die Schließstellung gebracht, d.h. daß beide Anlagenteile 1, 2 gleichzeitig bewegt werden. Dabei treten neben den Normalkräften (Dichtkraft) auch erhebliche tangentiale Schiebekräfte auf.

Der Federstahlblechstreifen 5 weist eine bogenförmig gekrümmte Dichtungszone 10 auf. Die beiden Längsränder des Federstahlblechstreifens 5 weisen zur selben Seite und liegen als Spannränder 6, 7 parallel aufeinander. Zwischen dem Spannrand 7 und der Dichtzone 10 sind zwei Abwinkelungen 11, 12 von jeweils 90 ° parallel zu den Längsrändern in den Federstahlblechstreifen 5 eingeformt. Dadurch wird am Federstahlblechstreifen 5 eine Auflagefläche gebildet, die flächig auf einer entsprechenden Auflagefläche 15 eines Stützelements 8, das im Querschnitt ein L-Profil aufweist, aufliegt und den Federstahlblechstreifen 5 gegen die Dichtkraft in der Schließstellung abstützt. Der vertikale Schenkel dieses L-Profils drückt die beiden Spannränder 6, 7 mittels einer Spannvorrichtung 9 (z.B. Schraubverbindung) gegen das Anlagenteil 2 und fixiert so den Federstahlblechstreifen 5. Um beim Einschwenken des Anlagenteils 1 in die Schließstellung ein Abheben des Federstahlblechstreifen 5 im Bereich der Abwinkelung 12 von der Auflagefläche 15 zu verhindern, ist es ein V-förmiges Profil 4 als Niederhalter vorgesehen, da im Bereich der Abwinkelung 12 im Inneren des gewölbten Federstahlblechstreifen 5 auf dessen Auflagefläche drückt. Das V-Profil 4 ist über die Klemmverbindung 9 zwischen den Spannrändern 6, 7 fixiert. Der Federstahlblechstreifen 5 ist in Fig. 8 in unverformtem Zustand dargestellt.

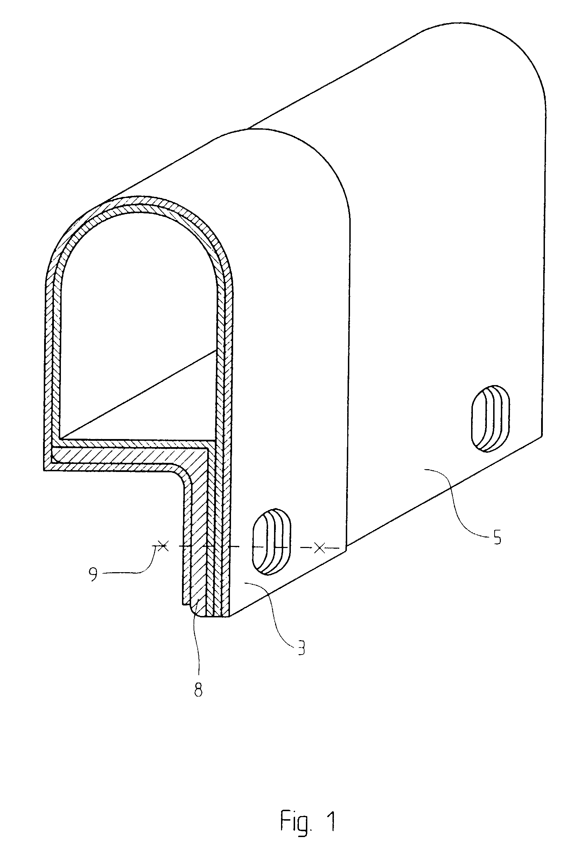

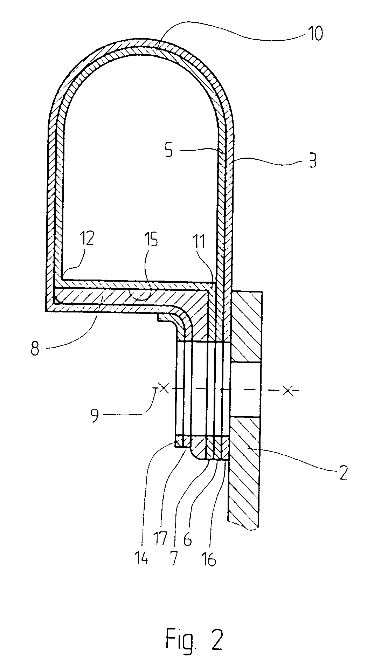

Ausgehend von diesem Stand der Technik wird durch die vorliegende Erfindung vorgeschlagen, das kritische Abheben des Federstahlblechstreifens von der Auflagefläche des jeweiligen Stützelements durch eine Vielzahl von Haltemanschetten zu verhindern, die in axialem Abstand voneinander in der Weise angeordnet sind, daß sie den Federstahlblechstreifen außen jeweils umschließen. Eine mögliche Ausführungsform ist in einer perspektivischen Darstellung in Fig. 1 wiedergegeben. Ebenso wie in den Fig. 2 bis 7 wurden dabei für funktionsgleiche Teile dieselben Bezugszeichen verwendet wie in Fig. 8. Man erkennt den in gleicher Weise wie in Fig. 8 gebogenen Federstahlblechstreifen 5, der auf dem L-Profil des Stützelements 8 aufliegt. Über einen kleinen Teilbereich seiner axialen Länge ist der Federstahlblechstreifen 5 außen von einer eng anliegenden Haltemanschette 3 umgeben, die vorzugsweise aus artgleichem Material wie der Federstahlblechstreifen 5 besteht. Im Gegensatz zum Federstahlblechstreifen 5 verläuft die Haltemanschette 3 im Bereich des Stützelements 8 in der Weise, daß sie eng an deren Unterseite anliegt. Über eine vorzugsweise als Schraubverbindung ausgeführte Klemmverbindung 9 werden der Federstahlblechstreifen 5, die Haltemanschette 3 und das Stützelement 8 zusammengehalten und an das jeweilige Anlagenteil befestigt. Dies ist in Fig. 2 im Querschnitt näher dargestellt. Das Anlagenteil, an das die erfindungsgemäße Vorrichtung zur Abdichtung befestigt werden soll, ist mit dem Bezugszeichen 2 versehen. Die Haltemanschette 3 weist zwei Abwinkelungen von 90 ° auf, die den beiden Abwinkelungen 11, 12 des Federstahlblechstreifen 5 und somit dem Winkel des Stützelements 8 entsprechen. Während der Abstand zwischen den beiden Abwinkelungen 11, 12 der Breite der Auflagefläche 15 des Stützelements 8 entspricht, wurde der Abstand der beiden Abwinkelungen der Haltemanschette 3 so gewählt, daß die Haltemanschette 3 im montierten Zustand dicht an der Unterseite L-Profils, also an der Rückseite der Auflagefläche 15 anliegt. Dadurch ist die Haltemanschette 3 im Bereich des den beiden Spannrändem 6, 7 des Federstahlblechstreifens 5 abgewandten Randes der Auflagefläche 15 in vertikaler Richtung zur Auflagefläche 15 am Stützelement 8 festgelegt, kann also nicht in Richtung der gebogenen Dichtungszone 10 des Federstahlblechstreifen 5 abheben. Infolgedessen ist auch der Federstahlblechstreifen 5 selbst im Bereich der Abwinkelung 12 an einem Abheben von der Auflagefläche 15 gehindert. In in Sonderfällen kann es empfehlenswert sein, ein Unterlegelement 14 im Bereich der Klemmverbindung 9 vorzusehen, das die Haltemanschette 3 im Bereich unterhalb der Auflagefläche 15 abstützt. Hierzu ist in Fig. 2 das Unterlegelement 14 im Querschnitt L-förmig gestaltet.

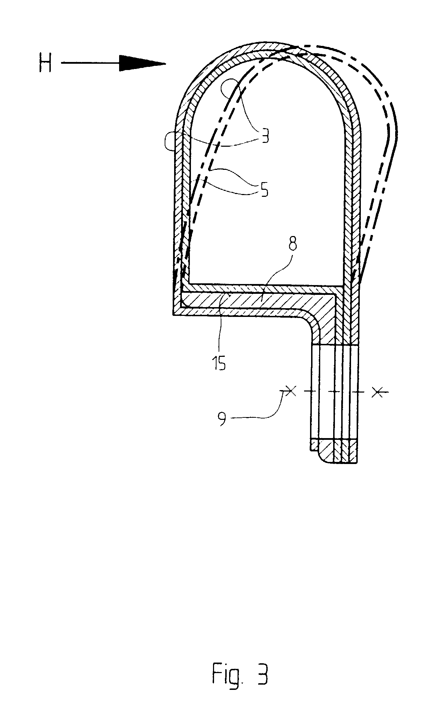

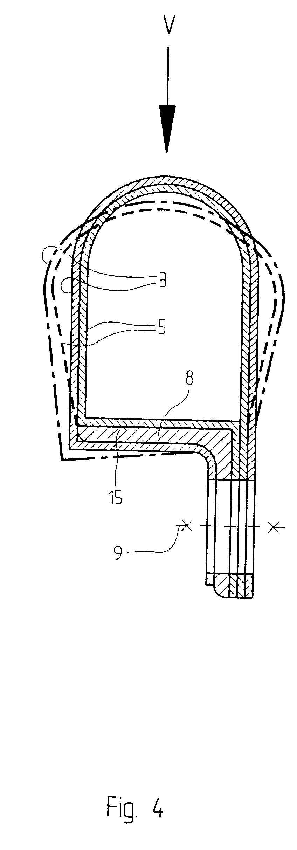

Die beiden Fig. 3 und 4 zeigen in schematischer Darstellung, wie sich die erfindungsgemäße Dichtungsanordnung gemäß Fig. 2 unter Einwirkung einer tangential im Dichtungsbereich angreifenden Kraft H (Fig. 3) und einer vertikal auf den Dichtungsbereich einwirkenden Kraft V (Fig. 4) verformt. Die schematisierte Verformung der Haltemanschette 3 ist jeweils als strichpunktierte Linie dargestellt, während die Verformung des Federstahlblechstreifens 5 gestrichelt wiedergegeben ist. Fig. 3 macht deutlich, daß auch unter Einwirkung tangentialer Verformungskräfte H, die in der "kritischen" Richtung auf die Einspannstelle verlaufen, keine Veränderung der flächigen Auflage des Federstahlblechstreifens 5 auf der Auflagefläche 15 eintritt. Es findet kein Abheben des Federstahlblechstreifens 5 statt. Auf der anderen Seite läßt die Haltemanschette 3 aber durchaus eine Biegung des gewölbten Federstahlblechstreifens 5 in Richtung der tangentialen Kraft H zu. Die Wirkung vertikaler Kraftkomponenten, die in Richtung auf die Auflagefläche 15 verlaufen, zeigt Fig. 4. Man erkennt, daß die Haltemanschette 3 im Bereich des linken Randes der Auflagefläche 15 nach unten von der Rückseite des Stützelements 8 geringfügig abheben kann. Durch das Unterlegelement 14 in Fig. 2 kann bei Bedarf der Neigung zu einem solchen Abheben entgegengewirkt werden. Im übrigen führt eine derartige Kraft V zu einer gewissen Einbeulung im Scheitelbereich und einer gewissen Ausbeulung in den Seitenbereichen des Federstahlblechstreifens 5 wie auch der Haltemanschette 3.

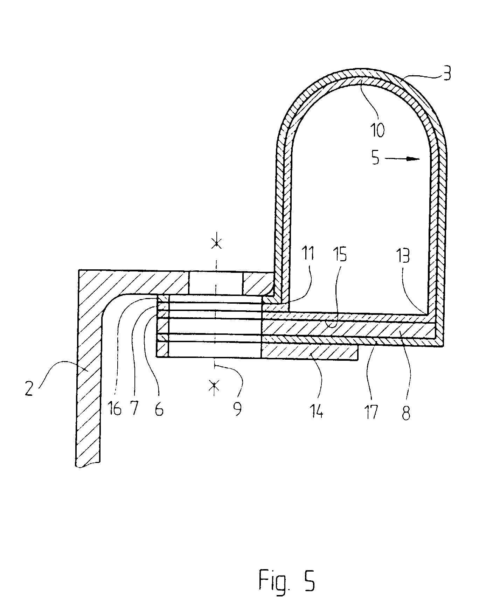

Fig. 5 zeigt eine abgewandelte Ausführungsform der erfindungsgemäßen Vorrichtung. Im Unterschied zur Ausführung der Fig. 2 ist der Federstahlblechstreifen 5 zu beiden Seiten der Dichtungszone 10 mit Abwinkelungen 11, 13 versehen, damit eine flächige Auflage auf der Auflagefläche 15 des Stützelements 8 gewährleistet ist, daß im vorliegenden Fall nicht als L-Profil, sondern als flacher Halteblechstreifen ausgebildet ist. Die Haltemanschette 3 ist mit ähnlichen Abwinkelungen versehen, so daß die Spannränder 16, 17 der Haltemanschette 3 parallel zu den Spannrändern 6, 7 des Federstahlblechstreifens 5 ausrichtbar sind. Die Befestigung an dem Anlagenteil 2 erfolgt wiederum vorzugsweise mittels einer Schraubverbindung 9. Zur Erhöhung der Steifigkeit gegen ein Abheben der Haltemanschette 3 von der Rückseite des Stützelements 8 nach unten kann, soweit dies im Einzelfall wünschenswert sein sollte, in ähnlicher Weise wie in Fig. 2 ein zusätzliches Unterlegelement 14 eingesetzt werden. Je weiter sich dieses über die Rückseite des Stützelements 8 nach rechts hin erstreckt, um so steifer wird die Haltemanschette 3. Die grundsätzliche Funktion dieser Ausführungsform der Erfindung entspricht vollständig derjenigen der Fig. 2.

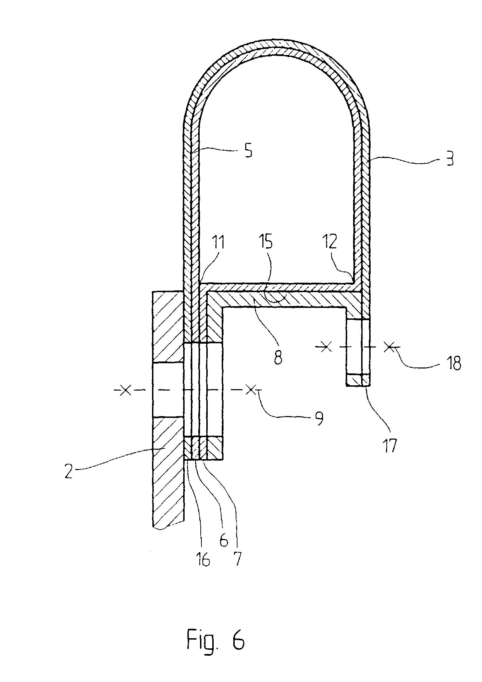

Eine weitere Variante der Erfindung geht aus Fig. 6 hervor. Sie zeigt eine Ausführung, bei der als Halteelement 8 ein etwa U-förmiges Profil verwendet wurde. Die Außenseite der Basis dieses U-Profils bildet die Auflagefläche 15, während der linke Schenkel des U-Profils die beiden Spannränder 6, 7 des Federstahlblechstreifens 5 und den Spannrand 16 der Haltemanschette 3 mittels der Schraubverbindung 9 mit dem Anlagenteil 2 verspannt. Der andere Spannrand 17 der Haltemanschette 3 liegt dicht an der rechten Außenseite des zweiten Schenkels des U-Profils 8 an. Er ist mittels einer Schraubverbindung 18 fest mit diesem zweiten Schenkel verbunden. Diese Ausführungsform hat den Vorteil, daß die Haltemanschette 3 nicht mit Abwinkelungen versehen sein muß, sondern als einfacher flacher Federstahlblechstreifen ausgeführt sein kann. Auch bei dieser Lösung ist gewährleistet, daß der Federstahlblechstreifen 5 im Bereich der Abwinkelung 12 nicht von der Auflagefläche 15 des Stützelements abheben kann. Im Unterschied zu den Fig. 2 und 5 liegt die Haltemanschette 3 nicht auf der Rückseite des Stützelements 8, sondern an einer abgewinkelten Verlängerung der Stützfläche 15 (rechter Schenkel des U-Profils) auf.

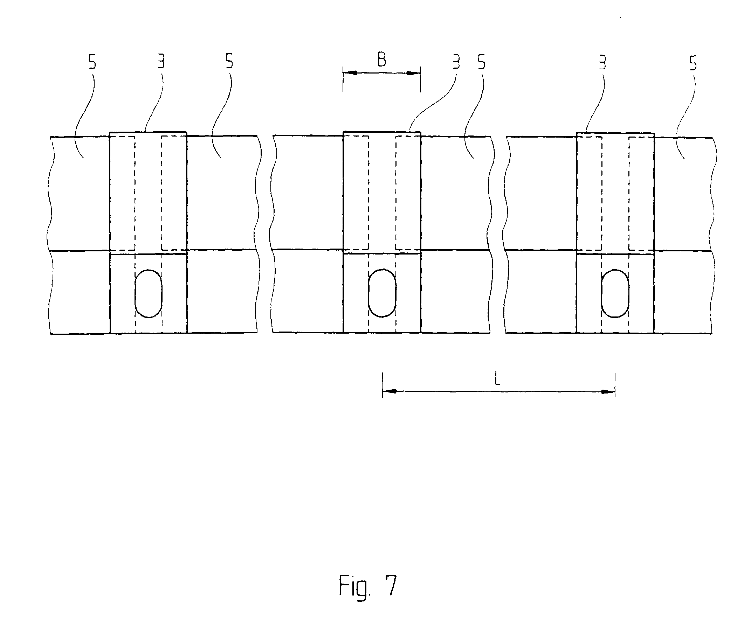

Fig. 7 zeigt eine bevorzugte Ausführungsform der Erfindung, die darin besteht, daß das Dichtungselement 5 nicht aus einem einzigen Federstahlblechstreifen besteht, der jeweils über die gesamte Länge der Dichtungszone erstreckt ist, sondern daß das Dichtungselement 5 aus mehreren Teillängen L zusammengesetzt ist, wobei die einzelnen Teillängen L stumpf aneinanderstoßen. Dabei empfiehlt es sich, die Haltemanschetten 3 jeweils im Stoßstellenbereich dieser Teillängen L so anzuordnen, daß sie den Stoßstellenbereich überdecken. Bei großen Längen dieser Teilstücke der Federstahlblechstreifen 5 kann es zweckmäßig sein, nicht nur im Stoßstellenbereich Haltemanschetten 3 vorzusehen, sondern zusätzliche Haltemanschetten 3 im Abstand voneinander dazwischen anzuordnen. Die axiale Länge einer Haltemanschette 3 beträgt zweckmäßigerweise weniger als 10 %, insbesondere weniger als 5 % der axialen Länge L des jeweiligen Teilstücks des Federstahlblechstreifens 5.

Zur Erleichterung der Montage empfiehlt es sich, die Haltemanschetten 3 durch Punktschweißung an die Federstahlblechstreifen 5 anzuheften. Es kann auch zweckmäßig sein, die Haltemanschette 3 jeweils durch Punktschweißung mit dem Stützelement 8 zu verbinden, um bei der Montage weniger lose Einzelteile miteinander verbinden zu müssen. Generell empfiehlt es sich, die Befestigung der Haltemanschetten 3, wie dies in den Fig. 2 bis 7 dargestellt ist, über die Klemmverbindung 9 vorzunehmen, die auch zur Befestigung der Federstahlblechstreifen 5 benutzt wird. Im Grundsatz ist es jedoch möglich, für die Befestigung der Haltemanschetten 3 separate Befestigungseinrichtungen vorzusehen.

Da zur Verhinderung eines Abhebens des Dichtungselements von seiner Auflagefläche nur vergleichsweise schmale Haltemanschetten benötigt werden, die nur in gewissen Abständen angebracht sein müssen und somit in vergleichsweise geringer Anzahl vorzusehen sind, und da hierfür relativ dünne Blechstreifen ausreichen, ist der Materialaufwand zur Ausführung einer erfindungsgemäßen Vorrichtung klein. Da die Haltemanschetten von außen um die Federstahlblechstreifen herumgelegt werden können, ist die Montage einfach. Auch bei sehr großen tangentialen Verformungskräften wird durch die erfindungsgemäße Ausführung ein Abheben des Dichtungselements von seiner Auflagefläche mit Sicherheit verhindert.

## Patentansprüche

1. Vorrichtung zur Abdichtung zwischen zwei relativ zueinander beweglichen Anlagenteilen (1, 2), insbesondere zwischen zwei Klappenflügeln oder einem Klappenflügel und einem Anschlag einer Rauchgasarmatur, enthaltend ein durch einen Federstahlblechstreifen gebildetes elastisches Dichtungselement (5), das zwei parallel nebeneinander angeordnete, nach der gleichen Seite weisende und mittels einer Klemmeinrichtung (9) an dem einen Anlagenteil (1 oder 2) befestigbare ebene Spannränder (6, 7) sowie eine bogenförmig gekrümmte Dichtungszone (10) enthält, wobei außerhalb der Dichtungszone (10) in Längsrichtung des Dichtungselements (5) zwei Abwinkelungen (11, 12 bzw. 13) vorgesehen sind, wobei femer die Unterseite des Dichtungselements (5) im Bereich zwischen einer Abwinkelung (12 bzw. 13) und dem zugeordneten Spannrand (7) auf der Oberseitigen Auflagefläche (15) eines Stützelements (8) flächig aufliegt und wobei der andere Anlagenteil (2 bzw. 1) im Scheitelbereich der bogenförmig gekrümmten Dichtungszone (10) mit dem Dichtungselement (5) in Berührung kommt und die Relativbewegung zwischen beiden Anlagenteilen (1, 2) etwa tangential zu diesem Scheitelbereich erfolgt,
dadurch gekennzeichnet,
daß das Dichtungselement (5) über einen Teil seiner axialen Länge außen von eng anliegenden, ebenfalls aus Federstahl gebildeten Haltemanschetten (3) übergreifend umgeben ist, wobei die Haltemanschetten (3) jeweils im Bereich des von den beiden Spannrändern (6, 7) des Dichtungselements (5) abgewandten Randes der Auflagefläche (15) in vertikaler Richtung zur Auflagefläche (15) am Stützelement (8) festgelegt sind.

2. Vorrichtung nach Anspruch 1,
dadurch gekennzeichnet,
daß die beiden Abwinkelungen (11, 12) auf derselben Seite des Dichtungselements (5) zwischen der Dichtungszone (10) und dem entsprechenden Spannrand (7) in einem der Breite der Auflagefläche (15) des Stützelements (8) entsprechenden Abstand angeordnet sind.

3. Vorrichtung nach Anspruch 2,
dadurch gekennzeichnet,
daß das Stützelement (8) als L-Profil ausgebildet ist, wobei der erste Schenkel des L-Profils die Auflagefläche (15) bildet und der zweite Schenkel des L-Profils die beiden Spannränder (6, 7) mittels der Klemmeinrichtung (9) auf das Anlagenteil (2) spannt, wobei die Haltemanschette (3) an der Rückseite der Auflagefläche (15) des Stützelements (8) anliegt.

4. Vorrichtung nach Anspruch 2,
dadurch gekennzeichnet,
daß das Stützelement (8) im wesentlichen als U-Profil ausgebildet ist, wobei die Außenseite der Basis des U-Profils die Auflagefläche (15) bildet, daß der erste Schenkel des U-Profils die beiden Spannränder (6, 7) mittels der Klemmeinrichtung (9) auf das Anlagenteil (2) spannt und daß die Haltemanschette (3) fest mit dem zweiten Schenkel des U-Profils verbunden ist.

5. Vorrichtung nach Anspruch 1,
dadurch gekennzeichnet,
daß das Stützelement (8) als flacher Halteblechstreifen ausgebildet ist, daß die beiden Abwinkelungen (11, 13) bezüglich der Dichtungszone (10) auf sich gegenüberliegenden Seiten des Dichtungselements (5) angeordnet sind, und daß der Halteblechstreifen die beiden Spannränder (6, 7) mittels der Klemmeinrichtung (9) auf das Anlagenteil (2) spannt, wobei die Haltemanschette (3) an der Rückseite der Auflagefläche (15) des Stützelements (8) anliegt.

6. Vorrichtung nach Anspruch 3 oder 5,
dadurch gekennzeichnet,
daß die Haltemanschette (3) über einen Teil der Breite der Auflagefläche (15) des Stützelements (8) mittels eines Unterlegelements (14) fest auf der Rückseite der Auflagefläche (15) des Stützelements (8) gehalten wird.

7. Vorrichtung nach einem der Ansprüche 1 bis 6,
dadurch gekennzeichnet,
daß das Dichtungselement (5) aus stumpf aneinanderstoßenden Teilstücken zusammengesetzt ist und der Stoßstellenbereich jeweils von einer Haltemanschette (3) überdeckt wird.

8. Vorrichtung nach einem der Ansprüche 1 bis 6,
dadurch gekennzeichnet,
daß die Haltemanschetten (3) durch die Klemmeinrichtung (9) an dem Stützelement (8) befestigt sind.

9. Vorrichtung nach einem der Ansprüche 1 bis 8,
dadurch gekennzeichnet,
daß die Haltemanschetten (3) durch Punktschweißung jeweils an einem Teilstück des Dichtungselements (5) angeheftet sind.

10. Vorrichtung nach einem der Ansprüche 1 bis 8,
dadurch gekennzeichnet,
daß die Haltemanschetten (3) mit einem Rand jeweils durch Punktschweißung an der Unterseite des Stützelements (8) angeheftet sind.

11. Vorrichtung nach einem der Ansprüche 7 bis 10,
dadurch gekennzeichnet,
daß bei aus langen Teilstücken zusammengesetzten Dichtungselementen (5) im Abstand von den Haltemanschetten (3) der Stoßstellenbereiche jeweils mindestens eine weitere Haltemanschette (3) vorgesehen ist.

12. Vorrichtung nach einem der Ansprüche 7 bis 11,
dadurch gekennzeichnet,
daß die axiale Länge (B) einer Haltemanschette (3) weniger als 10 %, insbesondere weniger als 5 % der Länge (L) eines Teilstücks des Dichtungselements (5) beträgt.

## Claims

1. A device for providing a seal between two plant components (1, 2) movable relative to one another, in particular between two valve leaves or a valve leaf and a limit stop for a flue gas fitting, comprising a resilient sealing element (5) which is formed of a spring steel strip and comprises two flat anchoring edges (6, 7) arranged in parallel next to each other, directed towards the same side and attachable to the one plant component (1 or 2) by means of a clamping device (9) together with an arcuately curved sealing zone (10), two bends (11, 12 or 13) being provided outside the sealing zone (10) in the longitudinal direction of the sealing element (5) and, moreover, the underside of the sealing element (5) resting flat on the top bearing surface (15) of a supporting member (8) in the area between a bend (12 or 13) and the associated anchoring edge (7), the other plant component (2 or 1) coming into contact with the sealing element (5) in the apex area of the arcuately curved sealing zone (10) and the relative movement between the two plant components (1, 2) occurring approximately tangentially to this apex area,
characterised in that
the sealing element (5) is completely surrounded externally over part of its axial length by close-fitting retaining sleeves (3), likewise of spring steel, wherein the retaining sleeves (3) are each secured to the supporting element (8) in the vertical direction relative to the bearing surface (15) in the area of the edge of the bearing surface (15) remote from the two anchoring edges (6, 7) of the sealing element (5).

2. A device according to claim 1,
characterised in that
the two bends (11, 12) are arranged on the same side of the sealing element (5) between the sealing zone (10) and the corresponding anchoring edge (7) at a distance corresponding to the width of the bearing surface (15) of the supporting element (8).

3. A device according to claim 2,
characterised in that
the supporting element (8) takes the form of an L-shaped profile, the first leg of the L-shaped profile forming the bearing surface (15) and the second leg of the L-shaped profile anchoring the two anchoring edges (6, 7) to the plant component (2) by means of the clamping device (9), the retaining sleeve (3) resting on the rear of the bearing surface (15) of the supporting element (8).

4. A device according to claim 2,
characterised in that
the supporting element (8) takes the form substantially of a U-shaped profile, the outside of the base of the U-shaped profile forming the bearing surface, in that the first leg of the U-shaped profile anchors the two anchoring edges (6, 7) to the plant component (2) by means of the clamping device (9) and in that the retaining sleeve (3) is firmly connected to the second leg of the U-shaped profile.

5. A device according to claim 1,
characterised in that
the supporting element (8) takes the form of a flat retaining strip, in that the two bends (11, 13) are arranged on opposing sides of the sealing element (5) relative to the sealing zone (10), and in that the retaining strip anchors the two anchoring edges (6, 7) to the plant component (2) by means of the clamping device (9), the retaining sleeve (3) resting against the rear of the bearing surface (15) of the supporting element (8).

6. A device according to claim 3 or claim 5,
characterised in that
the retaining sleeve (3) is secured to the rear of the bearing surface (15) of the supporting element (8) over part of the width of the bearing surface (15) of the supporting member (8) by means of a backing member (14).

7. A device according to any one of claims 1 to 6,
characterised in that
the sealing element (5) is composed of mutually abutting sections and each abutment joint area is overlapped by a retaining sleeve (3).

8. A device according to any one of claims 1 to 6,
characterised in that
the retaining sleeves (3) are attached to the supporting element (8) by the clamping device (9).

9. A device according to any one of claims 1 to 8,
characterised in that
the retaining sleeves (3) are each fastened to a section of the sealing element (5) by spot welding.

10. A device according to any one of claims 1 to 8,
characterised in that
the retaining sleeves (3) are each fastened by an edge to the underside of the supporting element (8) by means of spot welding.

11. A device according to any one of claims 7 to 10,
characterised in that,
in the case of sealing elements (5) composed of long sections, at least one additional retaining sleeve (3) is respectively provided at a distance from the retaining sleeves (3) of the abutment joint areas.

12. A device according to any one of claims 7 to 11,
characterised in that
the axial length (B) of a retaining sleeve (3) is less than 10 %, in particular less than 5 %, of the length (L) of a section of the sealing element (5).

## Revendications

1. Dispositif d'étanchéification entre deux pièces (1,2) mobiles l'une par rapport à l'autre, en particulier entre deux ailes de clapet ou une aile de clapet et une butée d'une évacuation de gaz de fumée, comportant un élément d'étanchéification (5) élastique, formé par une bande de tôle d'acier à ressort, qui présente deux bords de serrage plans (6,7), agencés parallèlement l'un à côté de l'autre, orientés du même côté et pouvant être fixés au moyen d'un dispositif de serrage (9) à une desdites parties (1 ou 2), ainsi qu'une zone d'étanchéification (10) cintrée en forme d'arc, deux coudes (11,12 ou 13) étant prévus à l'extérieur de la zone d'étanchéification (10) dans la direction longitudinale de l'élément d'étanchéification (5), le dessous de l'élément d'étanchéification (5), dans la zone entre un coude (12 ou 13) et le bord de serrage (7) associé, reposant de plus en surface sur la surface de réception supérieure (15) d'un élément d'appui (8) et l'autre desdites parties (2 ou 1) venant en contact, au voisinage du sommet de la zone d'étanchéification (10) cintrée en forme d'arc, avec l'élément d'étanchéification (5) et le mouvement relatif entre les deux parties (1,2) étant effectué sensiblement tangentiellement à cette zone de sommet,
caractérisé en ce que l'élément d'étanchéification (5), sur une partie de sa longueur axiale, extérieurement, est entouré, étroitement, par des manchons de maintien (3) formés de même en acier à ressort, les manchons de maintien (3) étant fixés sur l'élément d'appui (8) à chaque fois dans la zone du bord, opposée aux deux bords de serrage (6,7) de l'élément d'étanchéification (5), de la surface de réception (15) en direction verticale par rapport à la surface de réception (15).

2. Dispositif selon la revendication 1,
caractérisé en ce que les deux coudes (11,12) sont agencés du même côté de l'élément d'étanchéification (5) entre la zone d'étanchéification (10) et le bord de serrage correspondant (7) à une distance correspondant à la largeur de la surface de réception (15) de l'élément d'appui (8).

3. Dispositif selon la revendication 2,
caractérisé en ce que l'élément d'appui (8) est réalisé comme profilé en L, la première branche du profilé en L formant la surface de réception (15) et la seconde branche du profilé en L serrant les deux bords de serrage (6,7) au moyen du dispositif de serrage (9) sur ladite partie (2), le manchon de maintien (3) reposant sur la face arrière de la surface de réception (15) de l'élément d'appui (8).

4. Dispositif selon la revendication 2,
caractérisé en ce que l'élément d'appui (8) est réalisé généralement comme profilé en U, la face externe de la base du profilé en U formant la surface de réception (15), en ce que la première branche du profilé en U serre les deux bords de serrage (6,7) au moyen du dispositif de serrage (9) sur ladite partie (2), et en ce que le manchon de maintien (3) est solidaire de la seconde branche du profilé en U.

5. Dispositif selon la revendication 1,
caractérisé en ce que l'élément d'appui (8) est réalisé comme bande de tôle de maintien plate, en ce que les deux coudes (11,13), relativement à la zone d'étanchéification (10), sont agencés sur des côtés opposés de l'élément d'étanchéification (5), et en ce que la bande de tôle de maintien serre les deux bords de serrage (6,7) au moyen du dispositif de serrage (9) sur ladite partie (2), le manchon de maintien (3) reposant sur la face arrière de la surface de réception (15) de l'élément d'appui (8).

6. Dispositif selon la revendication 3 ou 5,
caractérisé en ce que le manchon de maintien (3) est maintenu de façon fixe sur la face arrière de la surface de réception (15) de l'élément d'appui (8), sur une partie de la largeur de la surface de réception (15) de l'élément d'appui (8), au moyen d'un élément de calage (14).

7. Dispositif selon une des revendications 1 à 6,
caractérisé en ce que l'élément d'étanchéification (5) est constitué de pièces partielles aboutées les unes aux autres, et la zone des joints est à chaque fois recouverte par un manchon de maintien (3).

8. Dispositif selon une des revendications 1 à 6,
caractérisé en ce que les manchons de maintien (3) sont fixés à l'élément d'appui (8) par le dispositif de serrage (9).

9. Dispositif selon une des revendications 1 à 8,
caractérisé en ce que les manchons de maintien (3) sont fixés à chaque fois à une pièce partielle de l'élément d'étanchéification (5) par soudure par points.

10. Dispositif selon une des revendications 1 à 8,
caractérisé en ce que les manchons de maintien (3) sont fixés, par un bord, à chaque fois par soudure par points au dessous de l'élément d'appui (8).

11. Dispositif selon une des revendications 7 à 10,
caractérisé en ce que, dans le cas d'éléments d'étanchéification (5) constitués de longues pièces partielles, il est prévu, à chaque fois, à distance des manchons de maintien (3) des zones des joints, au moins un autre manchon de maintien (3).

12. Dispositif selon une des revendications 7 à 11,
caractérisé en ce que la longueur axiale (B) d'un manchon de maintien (3) vaut moins de 10%, en particulier moins de 5% de la longueur (L) d'une pièce partielle de l'élément d'étanchéification (5).
